# EUROPÄISCHE PATENTANMELDUNG

(11) **EP 0 887 163 A2**
(43) Veröffentlichungstag der Anmeldung: **30.12.1998**
(21) Anmeldenummer: 98110225.4
(22) Anmeldetag: 04.06.1998
(51) Int. Cl.: B27K 3/36

(54) **Wässriges oder wasserverdünnbares Holzschutzmittel mit fungizider Wirksamkeit**

(30) Priorität: 27.06.1997 DE 19727284
(71) Anmelder: Remmers Bauchemie GmbH, D-49624 Löningen (DE)
(72) Erfinder: Pallaske, Michael, Dr., 49624 Löningen (DE)
(74) Vertreter: Bockhorni, Josef, Dipl.-Ing.

(57) **Zusammenfassung**

Die Erfindung betrifft ein wäßriges oder wasserverdünnbares Holzschutzmittel mit fungizider Wirksamkeit, das als Wirkstoff eine Verbindung der Formel (I)

R-NR'-C₁₋₈-Alkylen-Y (I)

in einer Menge von 0,1 bis 50 Gew.%, bezogen auf die Gesamtmenge des Mittels, enthält, wobei R für C₁₋₂₀-Alkyl, R''-[O-C₂₋₄-Alkylen]_{y}- oder R''-[NH-C₂₋₄-Alkylen]_{y} steht,
wobei R' für H oder C₁₋₈-Alkylen-Y steht,
R'' für H oder C₁₋₂₀-Alkyl steht,
Y für COOH, SO₃H, NH₂, NH-C₁₋₂₀-Alkly, N(C-₁₋₂₀-Alkyl)₂ oder deren Salze steht, und für eine ganze Zahl von 1 bis 8 steht und die Verbindung in wasserlöslicher Form vorliegt sowie ein Verfahren zum Schutz von Holzwerkstoffen unter Verwendung dieses Mittels.

## Beschreibung

Die Erfindung betrifft ein wäßriges oder wasserverdünnbares Holzschutzmittel mit fungizider Wirksamkeit sowie ein Verfahren zur Imprägnierung von Holzwerkstoffen mit diesem Mittel. Das Mittel enthält übliche Zusatzstoffe und Hilfsmittel und ist sowohl für den vorbeugenden Schutz von Holz als auch für die Bekämpfung eines bestehenden Befalls geeignet.

Zum Schutz von Holz vor Zerstörung und Qualitätsminderung durch Befall von Schadorganismen, insbesondere durch Pilzbefall, werden in erheblichem Umfang chemische Mittel mit biozider Wirksamkeit eingesetzt. Bei den meisten dieser chemischen Verbindungen bestehen jedoch Probleme, diese in eine für die Applikation geeignete Form zu bringen. Viele chemische Verbindungen mit fungizider Wirksamkeit sind für die Applikation aus wäßriger Lösung nicht oder nur eingeschränkt geeignet, d. h. benötigen in großem Umfang Hilfs- und Zusatzstoffe zur Stabilisierung und Verteilung. Des weiteren bestehen Schwierigkeiten, diesen Wirkstoff nicht nur auf die Oberfläche des Holzes zu bringen, sondern ihn in das Holz hineinzutragen und dort dauerhaft zu etablieren.

Insbesondere was die Langzeitwirkung anbetrifft, ist es essenziell, daß bei der Witterung ausgesetzten Holzwerkstoffen der daran oder darin etablierte fungizide Wirkstoff nicht wieder ausgewaschen wird. Bei Wirkstoffen, die aus einer hydrophoben Formulierung aufgebracht wurden und an der Oberfläche bleiben ist dies häufig der Fall; jedoch kann es hier durch Witterungseinflüsse schnell dazu kommen, daß die fungizide Beschichtung den Kontakt verliert und abgetragen wird. Andererseits sind solche chemische Verbindungen, die mehr oder weniger wasserlöslich sind, besonders empfindlich gegenüber Feuchtigkeitsein wirkung und Auswaschung. Holzschutz gegen Pilzbefall ist aber gerade erforderlich, wo der Holzwerkstoff Feuchtigkeit ausgesetzt ist, bespielsweise an Wetterseiten oder im Bodenkontakt.

Andererseits sind wäßrige oder wasserverdünnbare Formulierungen im Holzschutz besonders erwünscht, da bei solchen Formulierungen im allgemeinen das Gesundheitsrisiko für den Verarbeiter und Endverbraucher, der Umweltbeeinträchtigung und auch die Geruchsbelästigung reduziert sind. Wäßrige Lösungen haben zudem den Vorteil, daß sie recht gut in Holz eindringen und geeignet sind, den Wirkstoff in das Innere des zu schützenden Holzwerkstoffes hineinzutragen. Nach der Verdunstung des Wassers verbleibt dieser dann an Ort und Stelle und kann seine Wirkung entfalten.

Aus diesen Gründen besteht ein Bedarf an einem wäßrigen oder wasserverdünnbaren Holzschutzmittel, das ohne besonderen Aufwand appliziert werden kann und das einen darin gelösten Wirkstoff schnell und zuverlässig in die oberflächennahen Schichten des Holzwerkstoffes einschleppt und nach der Verdunstung seiner flüchtigen Bestandteile dort dauerhaft fixiert hinterläßt.

Der Erfindung liegt somit die Aufgabe zugrunde, ein wäßriges oder wasserverdünnbares Holzschutzmittel bereitzustellen, das den vorstehend genannten Anforderungen gerecht wird.

Diese Aufgabe wird mit einem Holzschutzmittel der eingangs genannten Art gelöst, das als Wirkstoff eine Verbindung der Formel (I)

R-NR'-C₁₋₈ Alkylen-Y (I)

in einer Menge von 0,1 bis 50 Gew.-%, bezogen auf die Gesamtmenge des Mittels, enthält,
wobei R für C₁₋₂₀-Alkyl, R''-[O-C₂₋₄-Alkylen]_{y}- oder R''-[NH-C₂₋₄-Alkylen]_{y} steht,
R' für H oder C₁₋₈-Alkylen-Y steht,
R'' für H oder C₁₋₂₀-Alkyl steht,
Y für COOH, SO₃H, NH₂, NH-C₁₋₂₀-Alkyl, N(C₁₋₂₀-Alkyl)₂ oder deren Salze steht,
und y für eine ganze Zahl von 1 bis 8 stehen, und die Verbindung in gelöster Form vorliegt.

Soweit es sich bei den Verbindungen der Formel (I) um Amphotenside handelt, kann es erfoderlich sein, zur Erzielung einer ausreichenden Löslichkeit dieser Verbindung, insbesondere dann, wenn sie in hoher Konzentration vorliegt, zur partiellen oder vollständigen Salzbildung benötigte Mengen einer Säure oder Base zuzusetzen. Zahlreiche Amphotenside sind dann, wenn sie ein inneres Salz bilden, im Bereich ihres isoelektrischen Punkts, nur eingeschränkt in Wasser löslich. Ist eine Salzbildung erforderlich, kann diese beispielsweise durch Zusatz geringer Mengen Natronlauge, Alkylamine oder auch Essigsäure herbeigeführt werden.

In der Bezeichnung 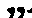 Alkylen" werden geradkettige oder verzweigte sowie alicyclische zweiwertige Kohlenwasserstoffreste erfaßt. C₂₋₄-Alkylen bezeichnet zweiwertige Ethylen-, Propylen- oder Butylenreste. Sind Polyamin oder Polyethereinheiten in der Kette R vorhanden, steht y für einen Mittelwert.

Erfindungsgemäß bevorzugt sind Amphotenside mit wenigstens einer Amino- und wenigstens einer Carboxylfunktion, die über eine gute fungizide Wirksamkeit verfügen und zugleich die Tendenz haben, in den Holzwerkstoffen einzudringen und sich zwischen den Holzfasern einzulagern und dort dauerhaft zu verbleiben. Es wird angenommen, daß aufgrund des immanenten Säuregehaltes eine Salzbildung und -bindung zwischen Holzwerkstoff und Amphotensid stattfindet, die den Wirkstoff im Werkstoff hält. Ganz besonders bevorzugt sind Amphotenside der allgemeinen Formel (II)

R-NR'-C₁₋₈-Alkylen-CO₂H (II)

oder deren Salze, wobei R und R' wie vorstehend definiert sind. Zu den Amphotensiden der Formel (II) gehören beispielsweise auch die Alkylaminoalkylglycine und deren Salze. Eine weitere besonders geeignete Gruppe von Verbindungen sind Amphotere auf Etheraminobasis der nachstehenden Formel (III)

R-O-(CH₂)₃-N(CH₂-CH₂-CO₂H)₂ (Mononatriumsalz) (III)

Als fungizide Wirkstoffe, die auf die Faser aufziehen und darauf bleiben sind auch Polyamine der Formel (I) geeignet, wie beispielsweise Bis-(3-aminopropyl)dodecylamin oder deren Derivate. Das Umsetzungsprodukt dieser Verbindung mit Chloressigsäure ergibt ein der Formel (II) entsprechendes Mono- oder Diglycinderivat, das ebenfalls zum Einsatz kommen kann.

Die erfindungsgemäßen Verbindungen haben zum einen eine fungizide Wirkung, wirken aber zum anderen als Tensid, was das Eindringvermögen in den Holzwerkstoff erhöht. Die zumeist doch erhebliche Kettenlänge bewirkt eine verbesserte Bindung innerhalb des Holzwerkstoffs bzw. Bindung an die Holzfaser. Überraschend wurde gefunden, daß sie auch bakterizid auf eine Reihe bodenlebender, holzzerstörender Bakterien wirken.

Im allgemeinen enthalten die erfindungsgemäßen Holzschutzmittel den Wirkstoff in einer Menge von 0,1 bis 5 Gew.-% bei anwendungsfertigen wäßrigen Formulierungen, besonders bevorzugt im Bereich von 0,1 bis 2,5 Gew.-%. Bei wasserdünnbaren Konzentraten, die vom Endverbraucher auf Verabeitungskonzentration gebracht werden müssen, werden im allgemeinen Konzentrationen von 5 bis 75 Gew.-% an Wirkstoff eingesetzt. Die Angaben beziehen sich jeweils auf die Gesamtmenge der Formulierung bzw. des Mittels.

Bei den erfindungsgemäßen Wirkstoffen handelt es sich um bekannte und nach bekannten Prinzipien herstellbare chemische Verbindungen, wie sie beispielsweise von den Firmen Lonza Ltd. unter Lonzabac 4.30 und 12.100 und Diversey Lever unter TEGO 51B und TEGO 2000 vertrieben werden.

Um Wirksamkeitslücken zu schließen, kann es erfoderlich sein, den erfindungsgemäßen Mitteln weitere fungizide, bakterizide oder insektizide Bestandteile zuzusetzen. Als Fungizide kommen beispielsweise Triazolfungizide in Frage, die - neben ihrer eigentlichen fungiziden Wirkung - eine synergistische Wirkung zusammen mit den Amphotensiden entfalten. Der Synergismus ist vermutlich darauf zurückzuführen, daß das Amphotensid das Triazolfungizid in den Holzwerkstoff einzuschleusen vermag und so dessen Verteilung und Mobilisierung fördert.

Als Fungizide kommen in erster Linie die bekannten Triazol-Fungizide in Frage, beispielsweise
- Propiconazol:: 1-(2,4-Dichlorphenyl)-4-propyl-1,3dioxolan-2-yl)-methyl)-1H-1,2,4-triazol,
- Tebuconazol:: alpha-[2-(4-Chlorphenyl)ethyl]-alpha-(1,1-dimethylethyl)-1H-1,2,4-triazol-1-ethanol,
- Azaconazol:: 1-[2,4-Dichlorphenyl)-1,3-dioxolan-2-yl-methyl]-1H-1,2,4-triazol,
- Fenbuconazol:: (RS)-4-(4-Chlorphenyl)-2-phenyl-2-(1H-
- Myclobutanil:: alpha-Butyl-alpha-(4-chlorphenyl)-1-1,2,4-triazol-1-propennitril,
- Triadimenol:: 1-(4-Chlorphenoxy)-3,3-dimethyl-1-(1H-1,2,4-triazol-1-yl-methyl)butan-2-ol.

Diese Triazol-Fungizide sind zweckmäßigerweise in einer Menge von 0,15 bis 1,5 Gew.-%, vorzugsweise von 0,4 bis 0,8 Gew.-%, bezogen auf die gesamte anwendungsfertige Formulierung, zugegen.

In Frage kommen ferner auch Nicht-Triazol-Fungizide, wobei die gleichen Konzentrationen im Holzschutzmittel eingesetzt werden, wie für die Triazol-Fungizide erwähnt. Zu nennen wären hier beispielsweise:
- Nuarimol:: alpha-(2-Chlorphenyl)-alpha-(4-fluorphenyl)-5-pyrimidinmethanol,
- Fenarimol:: alpha-(2-Chlorphenyl)-alpha-(4-chlorphenyl)-5-pyrimidinmethanol,
- IPBC:: 3-Iodpropargyl-N-butylcarbamat,
- Tolylfluanid:: N'-Dichlorfluormethylthio-N,N-dimethyl-N'-tolylsulfamid,
- Dichlofluanid:: N'-Dichlorfluormethylthio-N,N-dimethyl-N'-phenylsulfamid,
- TIAA:: 2,3-3-Triiodallylalkohol.

Weiterhin können in diesem Zusammenhang als Nicht-Triazol-Fungizide genannt werden
Xyligen Al: Tris-(N-cyclohexyldiazeniumdioxy)-aluminium,
Cu-HDO: N-Nitroso-N-cyclohexyl-hydroxylamin-Kupfer,
quaternäre Ammoniumverbindungen,
Betaine und polymere Betaine,
polychlorierte Kohlenwasserstoffe (PCP usw.),
bei denen die Konzentration in der gebrauchsfertigen Formulierung etwa 0,1 bis 10 Gew.-%, vorzugsweise 0,5 bis 5 Gew.-% beträgt.

Darüberhinaus können üblicherweise im Holzschutz verwandte Borverbindungen zugegen sein, beispielsweise Borsäure oder Borax, in Mengen von 1 bis 25 Gew.-%, bezogen auf die anwendungsfertige Formulierung.

Des weiteren können die erfindungsgemäßen Holzschutzmittel nach Bedarf bakterizide und/oder insektizide Wirkstoffe enthalten. Eingesetzt werden übliche Bakterizide oder Insektizide in den üblichen Konzentrationen. Bei den Insektiziden wären beispielsweise zu nennen:
Carbamate, wie beispielsweise Methomyl, Pirimicarb, Propoxur, Bendiocarb, Aldicarb;
Phosphorsäureester, wie beispielsweise Dichlorphos, Phoxium, Chlorpyriphos, Parathion, Fenitrothion, Trichlorphon;
synthethische Pyrethroide, wie beispielsweise Permethrin, Deltamethrin, Cypermethrin, Alphamethrin, Cyfluthrin;
Benzolharnstoffderivate, wie beispielsweise Flufenoxuron, Diflubenzuron, Hexaflumuron, Teflubenzuron;
Organosiliziumverbindungen, wie beispielsweise Silafluofen.

Jeder dieser Wirkstoffe sollte in einer die Wirkung garantierenden Menge, also im Bereich von 0,005 bis 1,0 Gew.-%, bezogen auf die gesamte Formulierung, vorliegen. Vorzugsweise beträgt die Konzentration eines jeden Wirkstoffs in der Formulierung 0,001 bis 0,5 Gew.-%. Es versteht sich, daß je nach Einsatzzweck mehrere Wirkstoffgruppen nebeneinander vertreten sein können.

Des weiteren können zur Erzielung einer insektiziden Wirkung Insektenhormone in einer Konzentration von 0,00005 bis 0,5 Gew.-%, bezogen auf die gesamte anwendungsfertige Formulierung, zugegen sein. Vorzugsweise beträgt die Konzentration eines jeden Hormons und Wirkstoffs in der Formulierung 0,001 bis 0,05 Gew.-%.

Neben den eigentlichen Juvenilhormonen der Insekten und Ecdysonen können einen Reihe von Analoga und Mimetika verwandt werden, wie sie von der Industrie entwickelt wurden und eine vergleichbare Wirkung auf die hormonellen Regelkreise der Insekten ausüben. Dabei handelt es sich sowohl um strukturell verwandte Verbindungen, d. h. um Derivate des Ecdysons und der Juvenilhormone, als auch um chemische Verbindungen, die trotz struktureller Andersartigkeit eine vergleichbare Wirkung ausüben. Letzeres gilt insbesondere für die Juvenilhormone, die in zahlreichen Varianten bekannt sind und für die eine große Anzahl von Analoga entwickelt wurden.

Geeignete Juvenilhormon-Analoga sind
- Pyriproxyfene:: 4-Phenoxyphenyl-(RS)-2-(2-pyridyloxy)propylether,
- Fenoxycarb:: Ethyl[2-(4-phenoxyphenoxy)ethyl]carbamat,
- Kinoprene:: 2-Propynyl-(E)-3,7,11-trimethyl-2,4-dodecadienoat,
- Methoprene:: Isopropyl-(2E,4E)-11-methoxy-3,7,11-trimethyl-2,4-dodecadienoat,
- Hydroprene:: Ethyl-(E,E)-(R,S)-3,7,11-trimethyldodeca-2,4-dienoat.

Von diesen sind Pyriproxyfen und Fenoxycarb bevorzugte Juvenilhormon-Analoga.

Als Ecdyson-Agonisten kommen in Frage
- Tebufenozide:: N-tert.-Butyl-N'-(4-ethylbenzoyl)propylether,
- RH-0345:: (käferspezifische Variante des Tebufenozide),
- RH-5849:: (leicht käferspezifische Variante des Tebufenozide,
- Azadirachtin bzw. Azadirachtanin.:

Von diesen sind Tebufenozide und RH-0345 (eine coleopterenspezifische Variante des Tebufenocide) bevorzugte Ecdyson-Agonisten.

Bevorzugt sind Holzschutzmittel, die eine Kombination der beiden Juvenilhormon-Analoga Pyriproxyfen und Fenoxycarb enthalten. Die beiden Wirkstoffe ergänzen sich in ihrer Wirkungsweise optimal dahingehend, daß Fenoxycarb vor allem im Embryonalstadium und bei der Methamorphose Wirkung gegenüber den holzzerstörenden Insekten entfaltet, während Pyriproxyfen auch während des Larvenstadiums wirksam ist.

Besonders bevorzugt sind Holzschutzmittel, die eine Kombination der Juvenilhormonanaloga Pyriproxyfen und/oder Fenoxycarb und der Ecdysonagonisten Tebufenocide und/oder RH 0345 enthalten. Die beiden Hormonanaloga zeitgleich verabreicht ergänzen sich in ihrer Wirkungsweise optimal dabingehend, daß die natürlichen hormonellen Rahmenbedingungen erzeugt werden, unter denen eine Häutung erfolgt.

Darüberhinaus enthalten die erfindungsgemäßen Mittel neben der Wirkkomponenten mindestens ein Verdünnungs- oder Lösungsmittel. Bindemittel können ebenfalls zugegen sein, sowie übliche weitere Zusätze.

Weitere, an sich bekannte Bestandteile der erfindungsgemäßen Mittel können beispielsweise Fixiermittel, Weichmacher, Emulgiermittel, Netzmittel, Lösungsvermittler sowie die Verarbeitung fördernde Mittel sein. Zusatzmittel verschiedenster Art, wie Pigmente, Farbstoffe, Korrosionsschutzmittel, Geruchskorrigentien, pH-Regulierer, UV-Stabilisatoren können ebenfalls zugegen sein.

Die erfindungsgemäßen Holzschutzmittel können als Konzentrate oder als gebrauchsfertige Abmischung vorliegen. Geeignete Formulierungen für Anstrichmittel, Tränkmittel, Spritzmittel sowie Mittel für die Drückimprägnierung weiß der Fachmann zu formulieren. Die Applikation erfolgt durch übliche Maßnahmen, wie Streichen, Sprühen, Spritzen, Tauchen; als Imprägnierverfahren sind Tränk-, Tauch-, Druck-, Vakuum- oder Doppelvakuumverfahren einsetzbar.

Als Lösungsmittel können polare oder unpolare organische Lösungsmittel oder Mischungen der Vorgenannten eingesetzt werden, je nach Einsatzzweck und Wirkstoff bzw. Wirkstoffkombination. Die Verwendung von wäßrigen oder organisch-wäßrigen Lösungen, Emulsionen und/oder Suspensionen für erfindungsgemäße Zwecke ist bevorzugt. Zur Erhöhung oder Verbesserung der Löslichkeit einzelner Komponenten im flüssigen Träger kann es zweckmäßig sein, Emalgatoren oder Lösungsvermittler zuzusetzen. Voraussetzung ist die Wasserverdünnbarkeit der Konzentrate und die wäßrige oder orgainschwäßrige Natur des Trägers bei anwendungsfertigen Formulierungen.

Als polare organische Lösungsmittel werden bevorzugt solche eingesetzt, die Hydroxy-, Ether-, Keto- oder Estergruppen enthalten. Insbesonders geeignet sind Alkohole, Glykole, Glykolether, Diacetonalkohol, Polyole und deren Ester.

Als unpolare Lösungsmittel können aliphatische oder aromatische Kohlenwasserstoffe zugesetzt werden.

Als organisch-chemische Bindemittel werden im Rahmen der vorliegenden Erfindung in den vorgenannten organischen Lösungsmitteln lösliche oder dispergierbare oder emulgierbare Kunstharze oder bindende trocknende Öle eingesetzt, insbesondere Bindemittel, die aus Acrylatharz, einem Vinylharz, z. B. Polyvinylacetat, einem Polyesterharz, Polykondensations- oder Polyadditionsharz, Polyurethanharz, Alkydharz, Siliconharz, trocknenden pflanzlichen oder synthetischen Ölen oder physikalisch trocknenden Bindemitteln auf Basis eines Natur- oder Kunstharzes bestehen oder diese enthalten.

Als Bindemittel werden insbesondere Kunstharze in Form einer Emulsion, Dispersion oder Lösung, vorzugsweise Alkydharze bzw. modifizierte Alkydharze oder Phenolharze, wie auch Kohlenwasserstoffharze, vorzugsweise Inden-Cumaronharze verwandt. Als Bindemittel können aber auch Bitumen oder bituminöse Substanzen bis zu 15 Gew.% eingesetzt werden.

Alternativ zum Bindemittel oder ergänzend dazu können Fixierungsmittel und/oder Weichmacher eingesetzt werden.

Als Emulgiermittel können anionische oder kationische Emulgatoren wie auch Emulgatorgemische eingesetzt werden Als Beispiele seien Alkyl-, Aryl- und Alkylarylsulfonate sowie Phosphorsäurepartialester genannt, ferner quarternäre Ammoniumverbindungen.

Vorzugsweise werden aber nichtionische Emulgatoren allein oder im Gemisch eingesetzt, beispielsweise Alkylpolyglykolether oder -ester oder Alkylarylpolyglykolether oder -ester, Alkylphenolpolyglykolether, Polyoxyethylenderivate, Carbonsäurepolyethylenglykolester, Alkylolamide, eine Seitengruppe enthaltende ethoxylierte Phenole, insbesondere ethoxyliertes Nonylphenol, oder ethoxylierte Fettsäuren, wie auch Fettsäureester von Polyhydroxyverbindungen, insbesondere Mono- und Difettsäureester von Glycerin, Polyglycerin oder Glycerinpolyethylen- oder -polypropylenglykolethern.

Die Emulgatoren können mit Netzmitteln kombiniert werden, beispielsweise solchen auf Basis organischer Phosphoraminverbindungen.

Insbesondere bei der Herstellung von Emulsionskonzentraten, aber auch bei wasserhaltigen Holzschutzmitteln werden polare organische Lösungsmittel eingesetzt, vorzugsweise solche mit Hydroxyl-, Ether- oder Ketogruppen. Im Zusammenhang wird auf Ethylen- und Propylenglykol, deren Oligomere sowie die Monoalkylether derselben hingewiesen, insbesondere auf Ethylenglykol, Diethylenglykol, Ethylglykol, Butylglykol, Ethyldiglykol. Weiterhin ist Diacetonalkohol besonders geeignet.

Als Lösungsvermittler können auch anionenaktive oder kationenaktive, vorzugsweise jedoch nichtionische Tenside verwandt werden, welche die Wirkstoffe in Wasser in eine stabile Emulsion überführen können. Als Beispiele für anionische Tenside seien Alkyl-, Aryl- und Alkylarylsulfonate genannt, für kationische Tenside quarternäre Ammoniumverbindungen. Beispiele nicht ionischer Tenside sind Alkylpolyglykolether oder -ester und Alkylarylpolyglykolether oder -ester, Polyoxyethylenderivate, ethoxiliertes Nonylphenol, Fettsäureester von Polyhydroxyverbindungen, wie insbesondere Mono- und Difettsäureester von Glycerin, Polyglycerin oder Glycerinpolyethylen- oder -polypropylenglykolethern zu nennen.

Die erfindungsgemäßen Mittel können zusätzlich an sich bekannte Farbstoffe, Pigmente, wasserabweisende Mittel, Geruchskorrigentien und Inhibitoren bzw. Korrosionsschutzmittel und dergleichen enthalten. Als weiterer Zusatz kann in dem erfindungsgemäßen Mittel ein Aminoalkohol zur pH-Wertregulierung und/oder als Coemulgator enthalten sein, insbesondere Mono- oder Diethanolamin.

Für bestimmte Rezepturen kann es zweckmäßig sein, Antischaummittel, wie Siliconentschäumer oder Alkylphosphate, vorzugsweise n-Butylphosphat, zuzusetzen.

Weiterhin können andere Zusatzmittel, wie beispielsweise UV-Stabilisatoren, Verdickungsmittel, sowie Sikkative zugefügt werden. Als Sikkative, die vorzugsweise in Kombination mit einem Bindemittel auf Basis eines pflanzlichen Öles verwandt werden, gelangen vorzugsweise Kobalt-, Zink-, Cer- und/oder Manganoctoat und/oder -naphthenat zur Verwendung.

Als Rückverdünnungsmittel zur Herstellung von anwendungsfertigen Mitteln aus Konzentraten wird Wasser, ggf. zusammen mit den vorgenannten Verdünnungsmittel oder Verdünnungsmittelgemische, ggf. in Kombination mit Bindemitteln, Zusatzstoffen, Verarbeitungshilfsmitteln, Farbstoffen, Farbpigmenten, UV-Stabilisatoren, Korrosionsinhibitoren und dergleichen eingesetzt.

Zusätzlich können die erfindungsgemäßen Holzschutzmittel ein Stabilisierungsmittel oder Stabilisierungsmittelgemisch auf Basis eines Aryl-, Alkyl- oder Arylakyl-Gruppen tragenden Phenols, eines Bisphenols oder Bisphenolderivats, eines Bis-hydroxyarylalkans oder Bis-hydroxyarlyalkanderivates, eines Polyoxypolyphenylalkans und/oder mindestens eines Phosphatids enthalten.

Mit Hilfe des Stabilisierungsmittels werden die Wirkstoffe chemisch oder physikalisch stabil in dem Holzschutzmittel gehalten.

Die erfindungsgemäßen Holzschutzmittel können in Form eines Konzentrates oder als anwendungsfertiges Mittel, beispielsweise als Anstrichmittel in Form einer Lasur, insbesondere einer Farblasur, oder als Tränkmittel vorliegen, wobei das anwendungsfertige Mittel eine entsprechende Menge mindestens eines Verdünnungsmittels sowie ggf. weitere Verarbeitungs- und Zusatzstoffe enthält.

Die Erfindung betrifft ferner ein Verfahren zum Schutz von Holzwerkstoffen gegen holzzerstörende Pilze, bei der Holzwerkstoff mit einer Verbindung der Formel (I)

R-NR'-C₁₋₈-Alkylen-Y (I)

in einer Menge von 0,1 bis 50 Gew.-%, bezogen auf die Gesamtmenge des Mittels, enthält,
wobei R für C₁₋₂₀-Alkyl, R'-[O-C₂₋₄-Alkylen]_{y}- oder R''-[NH-C₂₋₄-Alkylen]_{y}-steht,
R' für H oder C₁₋₈-Alkylen-Y steht,
R'' für H oder C₁₋₂₀-Alkyl steht,
Y für COOH, SO₃H, NH₂, NH-C₁₋₂₀-Alkyl, N(C₁₋₂₀-Alkyl)₂ oder deren Salze steht,
und y für eine ganze Zahl von 1 bis 8 steht
in wäßriger Lösung imprägniert und trocken gelassen wird.

Die Behandlung des zu schützenden Materials erfolgt dadurch, daß es nach bekannten Verfahren, wie beispielsweise Streichen, Spritzen, Sprühen oder unter Anwendung von Imprägnierverfahren, appliziert wird.

Dazu wird das zu schützende Holz mit einer Menge von 100 bis 500 g, vorzugsweise 150 bis 250 g des erfindungsgemäßen Mittels pro m² Holzoberfläche behandelt.

Die erfindungsgemäßen Mittel eignen sich sowohl zur Bekämpfung eines akuten Befalls als auch zum vorbeugenden Schutz vor Pilzen.

Die Erfindung wird durch die nachstehenden Beispiele näher erläutert.

### Rahmenrezepturen

### 1. Imprägnierungen, wäßrige

| | |
|---|---|
| Selbstemulgierendes Alkydharz (Soja-Leinölalkyd ö. ä) | 7 - 12 Gew.-% |
| Shellsol AB | 2 Gew.-% |
| Wasser | add 100 Gew.-% |

### 2. Grundierungen, wäßrig

| | |
|---|---|
| Selbstemulgierendes Alkydharz | 8 - 12 Gew.-% |
| Acrylatpolymer | 2 - 4 Gew.-% |
| Shellsol AB | 2 Gew.-% |
| Butylglykol | 3 - 4 Gew.-% |
| Addtive (Siccativ, Antiabsetzmittel, Antioxidant, pH-Stabilisator) | 2 Gew.-% |
| Wasser | add 100 Gew.-% |

3. Lasuren, wäßrig

| | |
|---|---|
| Alydharz/Acrylat-Hybrid | 16 - 22 Gew.-% |
| Shellsol AB | 2 Gew.-% |
| Additive (Siccativ,Antiabsetzmittel, Antioxidant, pH-Stabilisator) | 3 - 4 Gew.-% |
| Anorg./Org. Pigmente | 0,1 - 4 Gew.-% |
| Butylglykol | 4 Gew.-% |
| Wasser | add 100 Gew.-% |

### 4. KD-Imprägniermittel

| | |
|---|---|
| Selbstemulgierendes Alkydharz | 30 Gew.-% |
| Emulgator | 10 Gew.-% |
| Butyldiglykol | 30 Gew.-% |
| Wasser | add 100 Gew.-% |

### Anwendungskonzentration 1:9

Die vorstehenden Rahmenrezepturen wurden mit den nachstehend im einzelnen aufgeführten Wirkstoffen bzw. Wirkstoffkombinationen, jeweils gelöst oder suspendiert in einer der Lösungsmittelkomponenten, versetzt.

### Beispiel 1

Die wäßrige Imprägnierung aus der Rahmenrezeptur 1 wurde mit der folgenden Wirkstoffkombination versetzt:

| | |
|---|---|
| Dodecylaminopropylglycin | 0,5 Gew.-% |
| Triethylamin | 0,2 Gew.-% |

Es wurde eine sprüh- und streichfähige wäßrige Imprägnierung mit einem ausgezeichneten Schutz gegen holzzerstörende Pilze erhalten, die durch Streichen, Tauchen oder Versprühen auf Konstruktionshölzer aufgebracht werden kann.

### Beispiel 2

Beispiel 1 wurde mit der wäßrigen Grundierung gemäß Rahmenrezeptur 2 wiederholt. Die wäßrige Grundierung konnte durch Aufstreichen appliziert werden und bot einen guten Haftgrund für weitere Anstriche.

### Beispiel 3

Die wäßrige Lasur gemäß Rahmenrezeptur 3 wurde mit der folgenden Wirkstoffkombination versetzt:

| | |
|---|---|
| N,N-Di(carboxyethyl)-3-alkoxypropylamin, Na-Salz | 0,5 Gew.-% |
| Pyriproxyfen | 0,01 Gew.-% |
| Propiconazol | 0,6 Gew.-% |

Das Mittel eignet sich ausgezeichnet als Holzschutzlasur für bestehende, zu schützende Einrichtungen.

### Beispiel 4

Die gleiche wäßrige Lasur in Beispiel 3 wurde unter Verwendung von 0,6 Gew.-% Tebuconazole als weiterem Fungizid hergestellt.

### Beispiel 5

Ein Holzschutzmittel für die Kesseldruckimprägnierung von Bauholz wurde mit der Rahmenrezeptur 4 wie folgt mit Wirkstoff versetzt:

| | |
|---|---|
| 3-Dodecylaminopropylglycin | 7,0 Gew.-% |
| Fenoxycarb | 0,05 Gew.-% |
| RH-0345 | 0,05 Gew.-% |
| quaternäre Ammoniumverbindung | 10 Gew.-% |
| Triethylamin | 0,2 Gew. % |

Das Imprägniermittel ist nach der Verdünnung im Verhältnis 1:9 einsatzfähig und besonders für die dauerhafte Imprägnierung von Bauholz geeignet.

### Beispiel 6

Ein Holzschutzmittel für die Kesseldruckimprägnierung von Baruholz wurde mit der Rahmenrezeptur 4 wie folgt mit Wirkstoff versetzt:

| | |
|---|---|
| 3-Dodecylaminopropylglycin | 7,0 Gew.-% |
| Deltamethrin | 0,1 Gew.-% |
| Tebuconazole | 3.0 Gew.-% |
| Propiconazole | 4.0 Gew.-% |
| quaternäre Ammoniumverbindung | 10 Gew.-% |
| Triethylamin | 0,2 Gew. % |

Das Imprägniermittel wird im Verhältnis 1:9 mit Wasser verdünnt und ist vorzugsweise für die dauerhafte Imprägnierung von Bauholz im Erdkontakt geeignet.

### Beispiel 7

Ein Holzschutzmittel für die Tauchbehandlung und Kesseldruckimprägnierung von Bauholz wurde mit der Rahmenrezeptur 4 wie folgt mit Wirkstoff versetzt:

| | |
|---|---|
| 3-Dodecylaminopropylglycin | 6,0 Gew.-% |
| Triethylamin | 1.0 Gew. % |
| Tebuconazole | 1.0 Gew.-% |
| Propiconazole | 3.0 Gew.-% |

Das Imprägniermittel wird im Verhältnis 1:9 mit Wasser verdünnt und ist vorzugsweise für den Schutz von Bauholz gegenüber holzzerstörenden Pilzen im Erdkontakt geeignet.

### Beispiel 8

Ein Holzschutzmittel für die Tauchbehandlung von Bauholz wurde mit der Rahmenrezeptur 4 wie folgt mit Wirkstoff versetzt:

| | |
|---|---|
| 3-Dodecylaminopropylglycin | 6,0 Gew.-% |
| Triethylamin | 1.0 Gew. % |
| Kupfersulfat | 2.0 Gew.-% |

Hierbei werden die komplexbildenden Eigenschaften der Amphotere genutzt, um das Kupfer im Holz zu fixieren. Das Imprägniermittel wird im Verhältnis 1:9 mit Wasser verdünnt und ist vorzugsweise für den Schutz von Bauholz gegenüber holzzerstörenden Pilzen im Erdkontakt geeignet.

## Patentansprüche

1. Wäßrige oder wasserverdünnbare Holzschutzmittel mit fungizider Wirksamkeit, dadurch gekennzeichnet, daß sie als Wirkstoff eine Verbindung der Formel (1)
R-NR'-C₁₋₈-Alkylen-Y (I)
in einer Menge von 0,1 bis 50 Gew.-%, bezogen auf die Gesamtmenge des Mittels, enthält,
R für C₁₋₂₀-Alkyl, R''-[O-C₂₋₄-Alkylen]_{y}- oder R''-[NH-C₂₋₄-Alkylen]_{y} steht,
R' für H oder C₁₋₈-Alkylen-Y steht,
R'' für H oder C₁₋₂₀ alkyl steht,
Y für COOH, SO₃H, NH₂, NH-C₁₋₂₀-Alkyl, N(C₁₋₂₀-Alkyl)₂ oder deren Salze steht,
und y für eine ganze Zahl von 1 bis 8 stehen und die Verbindung in wasserlöslicher Form vorliegt.

2. Holzschutzmittel nach Anspruch 1, dadurch gekennzeichnet, daß die Verbindung der Formel (I) ein Amphotensid mit wenigstens einer Amino und wenigstens einer Carboxylfunktion ist.

3. Holzschutzmittel nach Anspruch 1 oder 2, dadurch gekennzeichnet, daß sie als Wirkstoff eine Verbindung der Formel (II) enthält
R-NR'-C₁₋₆-Alkylen-COOH (II)
wobei R und R' wie in Anspruch 1 definiert sind und die Verbindung auch als Salz vorliegen kann.

4. Holzschutzmittel nach Anspruch 1 oder 2, dadurch gekennzeichnet, daß die Verbindung der Formel (I) ein Alkylaminoalkylglycin oder ein Salz davon ist.

5. Holzschutzmittel nach Anspruch 1 oder 2, dadurch gekennzeichnet, daß die Verbindung der Formel (I) Bis-3-(aminopropyl)dodecylamin oder ein Derivat aus dessen Umsetzung mit Chloressigsäure oder ein Salz davon ist.

6. Holzschutzmittel nach einem der vorstehenden Ansprüche, dadurch gekennzeichnet, daß es weitere fungizide, bakterizide und/oder insektizide Bestandteile enthält.

7. Holzschutzmittel nach einem der vorstehenden Ansprüche, dadurch gekennzeichnet, daß es den Wirkstoff der Formel (I) in einer Menge von 0,1 bis 5 Gew.-%, bezogen auf die Gesamtmenge des Mittels, enthält.

8. Wasserverdünnbares Holzschutzmittel nach einem der vorstehenden Ansprüche, dadurch gekennzeichnet, daß es die Verbindung der Formel (I) in einer Menge von 5 bis 75 Gew.-%, bezogen auf die Gesamtmenge des Mittels, enthält.

9. Holzschutzmittel nach einem der vorstehenden Ansprüche, dadurch gekennzeichnet, daß es übliche Bindemittel sowie Zusatzstoffe und Formulierungshilfsmittel zur Verbesserung der Stabilität, Benetzungsfähigkeit und Verarbeitbarkeit enthält.

10. Verfahren zum Schutz von Holzwerkstoffen gegen holzzerstörende Pilze, dadurch gekennzeichnet, daß der Werkstoff mit einer Verbindung der Formel (I)
R-NR'-C₁₋₈-Alkylen-Y (I)
in einer Menge von 0,1 bis 50 Gew.-%, bezogen auf die Gesamtmenge des Mittels, enthält,
wobei R für C₁₋₂₀-Alkyl, R''-[O-C₂₋₄-Alkylen]_{y} oder R''-[NH-C₂₋₄-Alkylen]_{y} steht,
R' für H oder C₁₋₈-Alkylen-Y steht,
R'' für H oder C₁₋₂₀-Alkyl steht,
Y für COOH, SO₃H, NH₂, NH-C₁₋₂₀-Alkyl, N(C₁₋₂₀-Alkyl)₂ oder deren Salze steht,
und für eine ganze Zahl von 1 bis 8 steht
und die Verbindung in wäßriger Lösung imprägniert und trocknen gelassen wird.

11. Verfahren nach Anspruch 10, dadurch gekennzeichnet, daß die Verbindung der Formel (I) ein Amphotensid mit wenigstens einer Amino- und wenigstens einer Carboxylfunktion ist.

12. Verfahren nach Anspruch 10 oder 11, dadurch gekennzeichnet, daß eine Verbindung der Formel (II) verwandt wird
R-NR'-C₁₋₈-Alkylen-COOH (II)
wobei R und R' wie in Anspruch 10 definiert sind und die Verbindung als Salz vorliegen kann.

13. Holzschutzmittel nach Anspruch 11 oder 12, dadurch gekennzeichnet, daß die Verbindung der Formel (I) ein Alkylaminoalkylglycin oder ein Salz davon ist.

14. Holzschutzmittel nach Anspruch 10, dadurch gekennzeichnet, daß die Verbindung der Formel (I) Bis-3-(aminopropyl)dodecylamin oder ein Derivat aus der Umsetzung mit Chloressigsäure oder ein Salz davon ist.

15. Verfahren nach einem der Ansprüche 10 bis 14, dadurch gekennzeichnet, daß die Lösung den Wirkstoff in einer Menge von 0,1 bis 5 Gew.-%, bezogen auf die Gesamtmenge der Lösung, enthält.

16. Verfahren nach einem der Ansprüche 10 bis 15, dadurch gekennzeichnet, daß die Lösung in einer Menge von 100 bis 250 g/m² Oberfläche des Holzwerkstoffs aufgebracht wird.
